# EUROPÄISCHE PATENTANMELDUNG

(11) **EP 2 551 734 A1**
(43) Veröffentlichungstag der Anmeldung: **30.01.2013**
(21) Anmeldenummer: 12004563.8
(22) Anmeldetag: 18.06.2012
(51) Int. Cl.: G05B 19/042

(54) **Verfahren zur automatischen Erzeugung von Anwenderprogrammcode für eine speicherprogrammierbare Steuerung zur Steuerung einer Maschine**

(30) Priorität: 29.07.2011 DE 102011108964
(71) Anmelder: Robert Bosch GmbH, 70469 Stuttgart (DE)
(72) Erfinder: Schultze, Stephan, 97816 Lohr am Main (DE); Koehl, Alexander, 97816 Lohr-Pflocksbach (DE)
(74) Vertreter: Thürer, Andreas

(57) **Zusammenfassung**

Die Erfindung betrifft ein Verfahren zur automatischen Erzeugung von Anwenderprogrammcode für eine speicherprogrammierbare Steuerung (400) zur Steuerung einer Maschine, wobei auswählbare Programmcodeteile (210, 220, 230) für die speicherprogrammierbare Steuerung zu einem ersten, früheren Zeitpunkt bereitgestellt werden, wobei wenigstens einer der auswählbaren Programmcodeteile (210, 220, 230) zur Aktivierung wenigstens einer Energiesparfunktion eines Energieverbrauchers der Maschine eingerichtet ist, wobei die wenigstens eine Energiesparfunktion Energiesparfunktionseigenschaften aufweist, wobei der Anwenderprogrammcode zu einem zweiten, späteren Zeitpunkt durch Kombination von von einem Anwender ausgewählten Programmcodeteilen (210, 220, 230) automatisch erzeugt wird. Die erfindungsgemäße Lösung ermöglicht das Einbinden von Energiesparfunktionen in SPS-Anwenderprogrammcode, ohne dass der Anwender selbst Kenntnisse hinsichtlich der speziellen Energiesparfunktionsprogrammieranforderungen der einzelnen Energieverbraucher haben muss.

## Beschreibung

Die vorliegende Erfindung betrifft Verfahren zur automatischen Erzeugung von Anwenderprogrammcode für eine speicherprogrammierbare Steuerung zur Steuerung einer Maschine.

### Stand der Technik

Eine Speicherprogrammierbare Steuerung (SPS), englisch Programmable Logic Controller (PLC), ist ein Gerät, das zur Steuerung oder Regelung einer Maschine oder Anlage eingesetzt wird und auf digitaler Basis programmiert wird.

Eine SPS hat im einfachsten Fall Eingänge, Ausgänge, ein Betriebssystem (Firmware) und eine Schnittstelle, über die das Anwenderprogramm geladen werden kann. Das Anwenderprogramm legt fest, wie die Ausgänge in Abhängigkeit von den Eingängen geschaltet werden sollen. Auch Antriebssteuerung (Motion Control, Drehzahlsteuerung mit kontrollierter Beschleunigung oder Verzögerung) wird über SPS realisiert.

Das Betriebssystem (Firmware) stellt sicher, dass dem Anwenderprogramm immer der aktuelle Zustand der Geber zur Verfügung steht. Anhand dieser Informationen kann das Anwenderprogramm die Ausgänge so schalten, dass die Maschine oder die Anlage in der gewünschten Weise funktioniert.

Die Anbindung der SPS an die Maschine bzw. Anlage erfolgt mit Sensoren und Aktoren. Die Sensoren sind an die Eingänge der SPS geschaltet und vermitteln der SPS das Geschehen in der Maschine oder Anlage. Beispiele für Sensoren sind z. B. Lichtschranken, Inkrementalgeber, Endschalter oder auch Temperaturfühler, Füllstandssensoren, etc. Die Aktoren sind an den Ausgängen der SPS angeschlossen und bieten die Möglichkeit, die Maschine oder Anlage zu steuern. Beispiele für Aktoren sind Schütze zum Einschalten von Elektromotoren, elektrische Ventile für Hydraulik oder Druckluft.

Zunehmend erfolgt die Verbindung der Sensoren und Aktoren mit der SPS über einen Feldbus und nicht mehr diskret. Hierdurch verringert sich der Verdrahtungsaufwand. Seit einiger Zeit werden auch nicht nur Sensoren und Aktoren, sondern Teile der SPS wie Eingangs- und Ausgangsbaugruppen über einen Bus und (Bus-)Interfacemodule an eine Zentralstation angebunden (dezentrale Peripherie). Die Bussysteme werden in modernen Anlagen von Netzwerken (z.B. SERCOS III, Profi-Net) abgelöst oder durch diese ergänzt. Gegenüber Bussystemen sind Netzwerke (Ethernet) flexibler und schneller.

Bei der Automatisierung von Maschinen und Anlagen gewinnt neben den Funktionalitäten, die eine Automatisierungslösung bietet, der Aspekt des effektiven Engineerings eine zunehmende Bedeutung. Hierbei geht es vor allem darum, in kurzer Zeit eine Applikation mit effizientem Programmcode übersichtlich abzubilden. Insbesondere bei der Automatisierung von Motion-Applikationen, bei denen ein wesentlicher Teil darin besteht, Achsen koordiniert zu bewegen, gibt es Besonderheiten. Von den Maschinenherstellern sind daher Programmierwerkzeuge entwickelt worden, um die Erzeugung von Anwendungsprogrammcode für SPS zu vereinfachen. Die Programmierung geschieht üblicherweise mittels einer entsprechenden Software auf einem Programmiergerät (z.B. eine Anwendung unter Microsoft Windows oder Linux auf einem PC oder ein zugeschnittenes System).

Die Programmierwerkzeuge enthalten bereits Programmiervorlagen mit vordefiniertem Programmcode, um grundlegende Maschinenabläufe, wie beispielsweise Fehlererkennung und - reaktion, oder typische Maschinenbetriebsarten wie "Initialisierung", "Automatik" für den Produktionsbetrieb und "Manuell" zum manuellen Bewegen der Antriebe einfach umzusetzen. Vor diesem Hintergrund wird bspw. von der Anmelderin als Programmiervorlage das sog. das Generic Application Template (GAT) bereitgestellt, welches die einfache und schnelle Entwicklung übersichtlicher Logic-Applikationen ermöglicht. Besonderheiten von Motion-Applikationen werden berücksichtigt. Ausgehend von einem Programmrahmen entsprechend IEC61131-3 ermöglicht es zusammen mit einem dialogbasierten Wizard die einfache und schnelle Entwicklung von Applikationen. Es unterstützt auch die Besonderheiten von Motion-Applikationen, wie zum Beispiel die Handhabung von Achsen. Programmiervorlagen stellen bspw. vordefinierte Zustandsautomaten und Schnittstellen zur Anpassung der Zustandsautomaten zur Verfügung. Die Programmiervorlage weist üblicherweise die Elemente GAT-Wizard in der Programmieroberfläche, Zustandsautomat (Zustandsmaschine) bzw. Maschinenmodule als SPS-Anwenderprogramm und Visualisierungselemente auf.

Der GAT-Wizard dient dazu, dialoggeführt die Programmiervorlage zu konfigurieren. Mittels dieser Dialoge werden beispielsweise Betriebsarten und Zustände, Maschinenmodule, Achsen und Visualisierungen verwaltet. Dabei wird im Hintergrund der Zustandsautomat als SPS-Anwendungsprogramm aufgebaut (automatisch generiert). Der Anwender muss dann noch die Funktion der Maschine in den verschiedenen Zuständen ausprogrammieren. Mittels des Wizards kann er relativ einfach die entsprechende Stelle im SPS-Programmiersystem anspringen, um dort SPS-Anwenderprogrammcode einzufügen. Das automatisch generierte SPS-Anwenderprogramm ist ein Programmrahmen, innerhalb dessen der Anwender z.B. die Zustände oder Zustandsübergänge ausprogrammiert. Durch die Darstellung der Struktur im GAT-Wizard behält der Programmierer jederzeit den Überblick. Dies vereinfacht für ihn die sog. Top-Down-Programmentwicklung.

Diese automatische Programmerzeugung soll im Hinblick auf den Energieverbrauch der angesteuerten Maschine verbessert werden. Insbesondere Leerlaufphasen werden in vielen SPS-Anwendungsprogrammen kaum berücksichtigt, so dass hier Verbesserungsbedarf besteht.

### Offenbarung der Erfindung

Erfindungsgemäß wird ein Verfahren zur automatischen Erzeugung von Anwenderprogrammcode für eine speicherprogrammierbare Steuerung zur Steuerung einer Maschine gemäß Anspruch 1 vorgeschlagen. Eine erfindungsgemäße Recheneinheit, z.B. ein Programmiergerät für eine SPS (ein sog. SPS-Anwenderprogrammiergerät), ist, insbesondere programmtechnisch, dazu eingerichtet, ein erfindungsgemäßes Verfahren durchzuführen.

Vorteilhafte Ausgestaltungen sind Gegenstand der Unteransprüche sowie der nachfolgenden Beschreibung.

### Vorteile der Erfindung

Die Erfindung stellt eine Möglichkeit vor, bei der automatischen Erzeugung von SPS-Anwenderprogrammcode Energiesparfunktionen der angesteuerten Maschine zu berücksichtigen. Es wurde geschätzt, dass sich durch Nutzung von Energiesparzuständen die durchschnittlichen Leerlaufverluste in der Produktionstechnik um ca. 20% reduzieren lassen.

Der Begriff "Energiesparfunktion" wird im Rahmen dieser Erfindung als Oberbegriff gebraucht, der jede Betriebsart und Funktionalität der Maschine umfasst, die gezielt auf einen geringen Energieverbrauch ausgelegt ist. Insbesondere sind davon Energiesparmodi, wie z.B. Standby, Ruhezustand usw. umfasst. Ein Energieverbraucher kann eine oder mehrere Energiesparfunktionen bieten. Als "Energieverbraucher" wird jedes ansteuerbare Element der Maschine bezeichnet, insbesondere Aktoren und Sensoren selbst sowie die von den Aktoren angesteuerten Komponenten, wie Motoren, Netzteile usw.

Die Erfindung wird vorzugsweise in Form von Software implementiert. Dies führt zu besonders geringen Kosten, insbesondere wenn eine ausführende Recheneinheit noch für weitere Aufgaben genutzt wird und daher ohnehin vorhanden ist. Geeignete Datenträger zur Bereitstellung der Software sind insbesondere Disketten, Festplatten, Flash-Speicher, EEPROMs, CD-ROMs, DVDs u.a.m. Auch ein Download der Software über Computernetze (Internet, Intranet usw.) ist möglich. Insbesondere wird Schutz begehrt für jedes Erzeugnis, das geeignet ist, ein erfindungsgemäßes Verfahren auszuführen, und insbesondere für eine programmierte Umsetzung der Erfindung in all ihren Erscheinungsformen, sei es als Computerprogramm, das über ein Computernetz angeboten ist und in diesem Moment auf einem Serverspeicher gespeichert ist, sei es als auf einem computerlesbaren Medium gespeicherte programmierte Verfahrensanweisung.

Die Erfindung unterstützt den Programmierer bei der Programmerstellung, indem Programmcodeteile für Energiesparfunktionen vordefiniert und in der Programmiervorlage (z.B. im GAT-Wizard) angeboten werden. Es bietet sich an, die Programmcodeteile im Rahmen einer Betriebsart für die Programmierung bereitstellen. Neben bereits auswählbare Betriebsarten "Initialisierung", "Automatisch", "Manuell" usw. rückt dann bspw. die Betriebsart "Energiesparen".

In letzter Zeit werden in Maschinen vermehrt Energiesparfunktionen (z.B. Energiesparmodi) zur Verfügung gestellt, um so die von der Maschine verbrauchte Energie, insbesondere im Leerlauf, reduzieren zu können. Programmiervorlagen nach dem heutigen Stand der Technik berücksichtigen jedoch nicht die Verwaltung von Energiesparfunktionen der angeschlossenen Energieverbraucher. Dadurch können die möglichen Energiesparfunktionen der angeschlossenen Energieverbraucher (Maschine und ihre Bestandteile) nur mit zusätzlichem Wissen im Bereich des Energiemanagements und zusätzlichem Programmieraufwand genutzt werden. Weiterhin muss die Programmiervorlage konzeptionell die entsprechende Erweiterung erlauben, was nicht in allen Fällen vorausgesetzt werden kann. Die vorliegende Erfindung behebt dieses Problem, indem die Energiesparfunktionen bereits von der Programmiervorlage berücksichtigt und somit als Programmcodeteile zur Verfügung gestellt werden, die der Programmierer nur noch auswählen und damit aktivieren muss.

Vorteilhaft werden unterschiedliche Energiesparzustände als Energiesparfunktionen innerhalb der Programmiervorlage unterstützt. Zweckmäßigerweise werden dabei typische Energiesparzustände von Maschinen bzw. Maschinenteilen als Programmcodeteile vordefmiert und zur Auswahl angeboten, beispielsweise Standby-Betrieb während der Produktion, Pausen-Betrieb (z.B. Mittagspause), Betrieb zur Wartung von Maschinenteilen. Die Zustände können optional auch mit Zeiten durch Bedienereingabe im Wizard versehen werden, beispielsweise eine Pausenzeit einer Mittagspause. Hierdurch kann ein SPS-Programmcodeteil generiert werden, der anhand von Energiesparattributen (wie z.B. minimale Pausenzeit, Energieverbrauch eines Energiemodus, ...) die entsprechenden Geräte in den jeweils optimalen Energiesparmodus bringt. Vorzugsweise wird bei der Durchführung der Erfindung (bspw. im Energiemanagement der Programmiervorlage) basierend auf den Informationen für jeden Energieverbraucher die jeweils optimale Energiesparfunktion ausgewählt, um z.B. die Leerlaufverluste in den Pausenzeiten auf ein Minimum zu reduzieren. Der durch die Verwendung der Programmiervorlage automatisch erzeugte Anwenderprogrammcode aktiviert diese Funktionen dann während des Betriebs an den jeweiligen Energieverbrauchern.

Weiter vorteilhaft kann vorgesehen sein, dass die Programmcodeteile der Energiesparfunktionen mit einer entsprechenden Vorhaltezeit für ihre Beendigung ausgestattet sind, um "just in time" den Produktionsbetrieb fortzusetzen. Dabei beendet das erzeugte SPS-Anwenderprogramm die Energiesparfunktion automatisch so rechtzeitig, dass der Produktionsbetrieb geplant fortgesetzt werden kann. Wird beispielsweise ein Zustand "Frühstückspause" mit der Angabe "Pausenzeit 15 min" verwendet, wobei die Pausenzeit innerhalb eines Dialogs der Programmiervorlage eingegeben wurde, kann diese Pausenzeit im SPS-Programmaufruf mit übergeben werden. Daneben können auch Energiesparfunktionen mit unbekannter Zeitdauer existieren, wobei diese dann üblicherweise durch Bedienung der Maschine verlassen werden.

Die Erfindung kann besonders vorteilhaft eingesetzt werden, wenn mindestens ein an die SPS angeschlossener Energieverbraucher, wie beispielsweise ein Antrieb, Funktionen zur Reduzierung des Energieverbrauchs, z.B. für den Leerlauf, wie z.B. durch PROFIenergy oder SERCOS Energy definiert, unterstützt.

Gemäß einer bevorzugten Ausführungsform der Erfindung wird automatisch SPS-Anwenderprogrammcode zur Aktivierung von Energiesparfunktionen mit Energiesparfunktionseigenschaften, die zum Programmierzeitpunkt bekannt sind, erzeugt. Eine Energiesparfunktionseigenschaft ist insbesondere eine Leistungsaufnahme im energiesparenden Zustand, ein Zeitbedarf zum Wiederherstellen des Produktionsbetriebes, ein Energieverbrauch zum Wiederherstellen des Produktionsbetriebes, eine mittlere Leistungsaufnahme im Produktionsbetrieb und/oder weitere Eigenschaften, wie sie beispielsweise bei PROFIenergy oder SERCOS energy spezifiziert sind. Das SPS-Anwenderprogramm wird vereinfacht, da das Lesen der Energiesparfunktionseigenschaften nicht zur Laufzeit des SPS-Anwenderprogramms erfolgt, sondern bereits zur Kompilierzeit des SPS-Anwenderprogramms bekannt ist.

Gemäß einer weiteren bevorzugten Ausführungsform der Erfindung ist die Verwendung von Energiesparfunktionseigenschaften aus Gerätebibliotheksdaten bzw. -dateien vorteilhaft. Bei dieser Ausgestaltung werden Energiesparfunktionseigenschaften über Gerätebeschreibungen in das Programmiersystem eingelesen. D.h. ein Gerät muss nicht zwingend ein Energiesparprofil implementiert haben.

Gemäß einer weiteren bevorzugten Ausführungsform der Erfindung sind Eingabemittel vorgesehen, bspw. in Form von Dialogeingaben in der Programmierumgebung, um Energiesparfunktionseigenschaften entgegen zu nehmen.

Hierbei werden die Eigenschaften mittels Dialog vom Benutzer eingegeben. Zusätzlich kann vorgesehen sein, die Energiesparfunktionseigenschaften in eine Gerätebibliothek zu übernehmen, so dass sie zukünftig auch ohne erneute Benutzereingaben zur Verfügung stehen. Gemäß einer weiteren bevorzugten Ausführungsform der Erfindung kann vorgesehen sein, dass die zu programmierende SPS so mit dem SPS-Anwenderprogrammiergerät kommuniziert, dass die Energiesparfunktionen von Verbrauchern in der Maschine dem SPS-Anwenderprogrammiergerät und damit der Programmiervorlage bis zum Programmierzeitpunkt bekannt gemacht werden. Hierbei sind Energiesparfunktionseigenschaften online aus den Energiesparfunktionen unterstützenden Geräten auslesbar (z.B. im Gerät vorhandene Daten eines Energiesparprofils). Es kann notwendig sein, dass die Geräte zum Programmierzeitpunkt angeschlossen und eingeschaltet sind. Auch hier kann vorgesehen sein, die Daten in eine Gerätebibliothek zu übernehmen, so dass sie zukünftig auch ohne angeschlossene Geräte zur Verfügung stehen.

Gemäß einer weiteren bevorzugten Ausführungsform der Erfindung wird das Anwenderprogramm automatisch so erzeugt, dass es Energiesparfunktionseigenschaften zur Laufzeit des SPS-Anwenderprogramms (d.h. während des Betriebs der Maschine) von der Maschine bzw. den darin enthaltenen Energieverbrauchern ausliest. Das Auslesen erfolgt insbesondere in einem Initialisierungsschritt während der Laufzeit. Bietet ein Energieverbraucher mehrere Energiesparfunktionen an, kann der Anwenderprogrammcode automatisch so erzeugt werden, dass eine Energiesparfunktion so ausgewählt wird, dass eine vorgebbare Bedingung erfüllt wird. Dies kann bspw. eine minimale Höchst-Leistungsaufnahme oder eine minimale Durchschnitts-Leistungsaufnahme sein.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

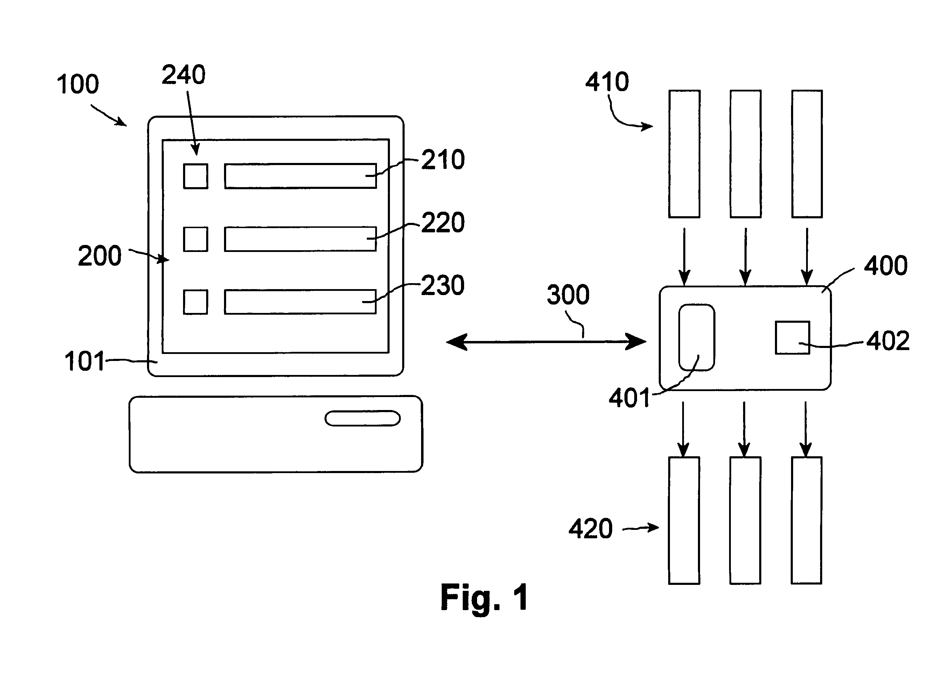

- Figur 1: zeigt grob schematisch eine bevorzugte Ausführungsform einer erfindungsgemäßen Recheneinheit.

In Figur 1 ist eine bevorzugte Ausführungsform einer als SPS-Programmiergerät ausgebildeten erfindungsgemäßen Recheneinheit 100 dargestellt, welche programmtechnisch zur Durchführung eines erfindungsgemäßen Verfahrens eingerichtet ist. Bei der Recheneinheit 100 kann es sich beispielsweise um einen herkömmlichen Computer handeln, auf dem eine SPS-Programmiersoftware 200 ausgeführt wird.

Die Erfindung betrifft den Programmiervorgang einer SPS 400 durch einen Anwender unter Verwendung des SPS-Programmiergeräts 100.

Das SPS-Programmiergerät 100 ist über eine entsprechende Verbindung 300, beispielsweise eine Ethernet-Verbindung oder eine serielle Verbindung mit der zu programmierenden SPS 400 verbunden. Die SPS 400 verfügt zumindest über eine Speichereinrichtung 401 zum Aufnehmen des erzeugten SPS-Anwenderprogramms sowie über eine CPU 402 zum Ausführen des gespeicherten SPS-Anwenderprogramms. Die SPS 400 ist weiterhin mit Sensoren 410 sowie Aktoren 420 verbunden, beispielsweise mittels einer Feldbus-Verbindung, insbesondere einer Ethernet-Feldbusverbindung wie z.B. SERCOS III, um gemäß dem SPS-Anwenderprogramm eine Maschine (nicht gezeigt) anzusteuern. Ein Sensor ist bspw. ein Temperatur-, Druck-, Drehzahl-, Lagesensor usw., jedoch auch ein Schalter, Drehknopf usw., und ist zur Erfassung von Eingangsgrößen (z.B. Temperatur, Druck, Drehzahl, Position, Stellung eines Schalters oder eines Drehknopfes) vorgesehen. Von dem SPS-Anwenderprogramm werden daraus Ausgangsgrößen (z.B. Temperatur, Druck, Drehzahl, Stromstärke, Spannung, Einspritzmenge, Position usw.) berechnet und mittels der Aktoren (z.B. elektronischer Schalter, Relais, Ventil usw.) eingestellt. Die Sensoren und Aktoren sind üblicherweise Bestandteil der Maschine.

Das Programmiergerät 200 ist programmtechnisch dazu eingerichtet, einen SPS-Anwenderprogrammcode automatisch ― gegebenenfalls unter Berücksichtigung von Anwendereingaben (bspw. Pausenzeiten) ― zu erzeugen. Dem Anwender wird dazu eine SPS-Programmiervorlage 200 auf einem Bildschirm 101 des Programmiergeräts 100 angezeigt. Im Rahmen der Erfindung sind in der Programmiervorlage 200 Programmcodeteile 210, 220, 230 vordefiniert, die jeweils zur Aktivierung wenigstens einer Energiesparfunktion eines Energieverbrauchers der Maschine eingerichtet sind. Die Programmcodeteile 210 bis 230 sind vom Anwender auswählbar, beispielsweise über Markieren von Auswahlfeldern 240.

Im gezeigten Beispiel dient der Programmcodeteil 210 dazu, die Maschine in einen Energiesparmodus "Pause" zu versetzen, der Programmcodeteil 220 dazu, die Maschine in einen Energiesparmodus "Standby" zu versetzen, und der Programmcodeteil 230 dazu, die Maschine in einen Energiesparmodus "Wartung" zu versetzen.

Beispielsweise ist der Programmcodeteil 210 so vordefiniert, dass er die Maschine in einen Energiesparmodus "Pause" versetzt, und dazu beispielsweise bestimmte Verbraucher (bspw. einen Motor) abschaltet, indem er beispielsweise über einen zugehörigen Schalter als Aktor die Spannungsversorgung trennt. Der Anwender (Bediener des SPS-Programmiergeräts) muss sich hier keine Gedanken über die tatsächlich anzusteuernden Aktoren machen. Vorzugsweise muss er sich auch keine Gedanken über in einem Pausemodus abschaltbare Energieverbraucher machen. Diese Entscheidungen werden im Voraus, bspw. vom Hersteller der Energieverbraucher getroffen, der die Energiesparfunktionen vorgibt und die entsprechenden Programmcodeteile im Voraus zu einem ersten, früheren Zeitpunkt erstellt hat.

Dasselbe gilt entsprechend für die anderen Energiesparmodi.

Zum Ende des Programmiervorgangs zu einem zweiten, späteren Zeitpunkt wird der SPS-Programmcode aus von dem Benutzer ausgewählten Programmcodeteilen zusammengesetzt und anschließend über die Verbindung 300 an die SPS 400 übertragen. Während des Ausführens des SPS-Anwenderprogramms auf der SPS 400 werden die vom Anwender ausgewählten Energiesparfunktionen entsprechend dem SPS-Anwenderprogramm durchgeführt.

Die erfindungsgemäße Lösung ermöglicht das Einbinden von Energiesparfunktionen in SPS-Anwenderprogrammcode, ohne dass der Anwender selbst Kenntnisse hinsichtlich der speziellen Energiesparfunktionsprogrammieranforderungen der einzelnen Energieverbraucher haben muss.

## Patentansprüche

1. Verfahren zur automatischen Erzeugung von Anwenderprogrammcode für eine speicherprogrammierbare Steuerung (400) zur Steuerung einer Maschine, wobei auswählbare Programmcodeteile (210, 220, 230) für die speicherprogrammierbare Steuerung zu einem ersten, früheren Zeitpunkt bereitgestellt werden, wobei wenigstens einer der auswählbaren Programmcodeteile (210, 220, 230) zur Aktivierung wenigstens einer Energiesparfunktion eines Energieverbrauchers der Maschine eingerichtet ist, wobei die wenigstens eine Energiesparfunktion Energiesparfunktionseigenschaften aufweist, wobei der Anwenderprogrammcode zu einem zweiten, späteren Zeitpunkt durch Kombination von von einem Anwender ausgewählten Programmcodeteilen (210, 220, 230) automatisch erzeugt wird.

2. Verfahren nach Anspruch 1, wobei der wenigstens eine der auswählbaren Programmcodeteile (210, 220, 230) zur Aktivierung wenigstens einer Energiesparfunktion mit Energiesparfunktionseigenschaften, die zum Programmierzeitpunkt bekannt sind, eingerichtet ist.

3. Verfahren nach Anspruch 1 oder 2, wobei der wenigstens eine der auswählbaren Programmcodeteile (210, 220, 230) zur Aktivierung wenigstens einer Energiesparfunktion mit Energiesparfunktionseigenschaften, die aus einer Gerätebibliotheksdatei entnommen werden, eingerichtet ist.

4. Verfahren nach einem der vorstehenden Ansprüche, wobei der wenigstens eine der auswählbaren Programmcodeteile (210, 220, 230) zur Aktivierung wenigstens einer Energiesparfunktion mit Energiesparfunktionseigenschaften, die vom Anwender eingeben werden, eingerichtet ist.

5. Verfahren nach einem der vorstehenden Ansprüche, wobei der wenigstens eine der auswählbaren Programmcodeteile (210, 220, 230) zur Aktivierung wenigstens einer Energiesparfunktion mit Energiesparfunktionseigenschaften, die zur Laufzeit des SPS-Anwenderprogramms ausgelesen werden, eingerichtet ist.

6. Verfahren nach einem der vorstehenden Ansprüche, wobei der wenigstens eine der auswählbaren Programmcodeteile (210, 220, 230) zur Aktivierung wenigstens einer Energiesparfunktion mit Energiesparfunktionseigenschaften, die während der Programmierung ausgelesen werden, eingerichtet ist.

7. Verfahren nach einem der vorstehenden Ansprüche, wobei eine Energiesparfunktionseigenschaft eine Leistungsaufnahme im energiesparenden Zustand, einen Zeitbedarf zum Wiederherstellen des Produktionsbetriebes, einen Energieverbrauch zum Wiederherstellen des Produktionsbetriebes oder eine mittlere Leistungsaufnahme im Produktionsbetrieb ist.

8. Verfahren nach einem der vorstehenden Ansprüche, wobei die wenigstens eine Energiesparfunktion wenigstens einen Energiesparzustand umfasst, insbesondere einen Standby-Betrieb während der Produktion, einen Pausen-Betrieb und einen Wartungsbetrieb.

9. Verfahren nach einem der vorstehenden Ansprüche, wobei der wenigstens eine der auswählbaren Programmcodeteile (210, 220, 230) zur Aktivierung wenigstens einer Energiesparfunktion als Bestandteil einer Betriebsart bereitgestellt wird.

10. Recheneinheit (100), die dazu eingerichtet ist, ein Verfahren nach einem der vorstehenden Ansprüche durchzuführen.
